# DEMANDE DE BREVET EUROPEEN

(11) **EP 3 206 182 A1**
(43) Date de publication de la demande: **16.08.2017**
(21) Numéro de dépôt: 17155742.4
(22) Date de dépôt: 10.02.2017
(51) Int. Cl.: G06Q 50/30, G06Q 10/06

(54) **PROCÉDÉ ET SYSTÈME DE GESTION DE RISQUES POUR UN SYSTÈME DE TRANSPORT TERRESTRE**

(30) Priorité: 12.02.2016 FR 1651163
(71) Demandeur: ALSTOM Transport Technologies, 93400 Saint-Ouen (FR); Institut de Recherche Technologique Systemx, 91120 Palaiseau (FR)
(72) Inventeur: GUENAB, Fateh, 94000 CRETEIL (FR); SOUBIRAN, Elie, 93270 BAGNOLET (FR); HAUTOT, Eric, 60520 LA CHAPELLE EN SERVAL (FR)
(74) Mandataire: Lavoix

(57) **Abrégé**

Le procédé de gestion comprend les étapes suivantes :
- identifier (96, 98) une liste de risques et d'accidents susceptibles d'affecter le système de transport analysé et, pour chaque risque et accident identifié, une valeur d'un indicateur représentatif de l'impact dudit risque ou accident,
- déterminer (100) une valeur d'indicateur tolérable,
- élaborer (102) au moins une mesure de réduction de la valeur de l'indicateur de sorte que ladite valeur dudit indicateur devient inférieure à la valeur d'indicateur tolérable,
- éditer (104) un tableau de gestion de risques associant à chaque risque et accident identifié la mesure de réduction et la valeur dudit indicateur obtenue en fonction de la mesure de réduction.

Les étapes d'identification, de détermination et d'édition sont réalisées de façon automatisée, l'étape d'élaboration de la mesure de réduction étant réalisée par un utilisateur.

## Description

La présente invention concerne un procédé de gestion des risques liés à un système de transport terrestre analysé, comprenant les étapes suivantes :
- identifier une liste de risques et d'accidents susceptibles d'affecter le système de transport analysé en fonction d'un état de fonctionnement donné du système de transport et, pour chaque risque et accident identifié, une valeur d'au moins un indicateur représentatif de l'impact dudit risque ou accident,
- déterminer pour chaque risque et accident identifié une valeur d'indicateur tolérable en dessous de laquelle l'innocuité du système de transport peut être démontrée,
- élaborer pour au moins une partie des risques et accidents identifiés au moins une mesure de réduction de la valeur de l'indicateur représentatif de l'impact, dont la mise en oeuvre permet de réduire la valeur dudit indicateur dudit risque et accident lorsque ladite valeur dudit indicateur est supérieure à la valeur d'indicateur tolérable, de sorte que ladite valeur dudit indicateur devient inférieure ou égale à la valeur d'indicateur tolérable associée audit risque et accident,
- éditer un tableau de gestion de risques du système de transport analysé, ledit tableau associant à chaque risque et accident identifié la mesure de réduction de la valeur de l'indicateur et la valeur dudit indicateur dudit risque et accident obtenue en fonction de la mesure de réduction.

L'invention concerne également un système de gestion des risques permettant de mettre en oeuvre un tel procédé.

L'invention s'applique par exemple à un système de transport terrestre du type système ferroviaire, système de transport routier autonome privatif ou en commun en site propre ou non, tout système de transport ayant des fonctions de conduites et/ou de protections partiellement déchargées à au moins un système électronique et/ou informatique embarqué ou distant, ou encore toute combinaison de système de transport ayant des caractéristiques hétérogènes, tel qu'un système mixte tramway/train, un système de supervision d'un ensemble de transport en commun ou du fret multimodal.

Dans le domaine du transport terrestre, la gestion de risques permet d'éviter les accidents ou incidents ou d'en limiter l'occurrence et de diminuer les conséquences de tels accidents ou incidents, notamment en termes de sécurité des utilisateurs de systèmes de transport, des équipements, ou encore de l'environnement, de réduction des délais d'attente en cas de panne et d'impact économique pour l'entreprise exploitant de tels systèmes.

La gestion de risque est appliquée à tout type de système de transport terrestre, allant d'une partie constitutive d'un véhicule ou d'une infrastructure à un véhicule ou une infrastructure dans son ensemble jusqu'à la gestion du trafic d'un ensemble de véhicules et cette gestion de risque est appliquée pendant les phases de conception et d'exploitation du système de transport et ce jusqu'au retrait du service du système de transport.

Ainsi, la gestion de risques s'applique à des systèmes très variés qui cependant deviennent de plus en plus interdépendants (multi-modalité etc.).Cette variété rend difficile la mise en oeuvre d'un procédé de gestion de risques unifié permettant de s'appliquer à tout type de système de transport ou à leur combinaison. En effet, il existe un grand nombre de risques encourus par ces systèmes de transport et d'accidents susceptibles de les affecter, ces risques et accidents n'étant pas nécessairement communs à tous ces systèmes. En outre, lorsque les systèmes de transport font intervenir des employés différents pour leur élaboration et/ou leur exploitation, les risques et accidents ne sont pas nécessairement identifiés selon un vocabulaire cohérent alors même qu'ils sont susceptibles de s'appliquer à plusieurs systèmes de transport, ce qui rend difficile toute automatisation de l'identification des risques et accidents susceptibles de s'appliquer à tout ou partie des systèmes de transport analysés.

Dans ce contexte, la gestion de risques liée aux systèmes de transport s'applique pour chaque classe de systèmes, chaque solution ou système de ces classes et enfin chaque projet de déploiement d'une solution ayant des caractéristiques normatives, environnementales et opérationnelles potentiellement distinctes.

Par conséquent, au vu de ces difficultés, la gestion de risques liée aux systèmes de transport est généralement mise en oeuvre système par système, sans que les informations liées à une classe de système (respectivement liées à un projet) soient partagées et transmises pour la gestion de risques d'un autre système de la même classe (respectivement à un autre projet de déploiement de la même solution), y compris lorsque les mêmes risques et accidents sont susceptibles de s'appliquer à ces systèmes(respectivement à ces projets), ce qui réduit l'efficacité de cette gestion de risque. Finalement, aucun cadre commun d'analyse inter-classe n'existe. En outre, la gestion de risque est peu ou pas automatisée, ce qui entraîne une lourdeur, une lenteur et des coûts importants pour la mise en oeuvre de plans de gestion de risques. En effet, la ou les personnes en charge de l'élaboration d'un plan de gestion de risques doivent réaliser l'ensemble des étapes permettant l'établissement de ce plan, de l'identification des risques et accidents susceptibles d'affecter le système de transport analysé à la génération d'un tableau de gestion de risques permettant d'associer des mesures à mettre en oeuvre ou de vérifier la pertinence des mesures mises en oeuvre en réponse aux risques et accidents identifiés. Ces personnes prennent aussi en charge, tout au long du cycle de conception, la traçabilité et le raffinement des mesures de protection qu'elles soient fonctionnelles, procédurales, architecturales, qualitatives etc... Dans un contexte de système de système, ces personnes doivent aussi s'assurer de l'adéquation des contraintes exportées et importées entre les différents systèmes constitutifs, mais aussi de nouveaux risques liés à des problématiques d'environnement partagé entre système. Les plans de gestion de risque sont ainsi souvent repris à zéro pour les différents systèmes de transport et implémentés de façon rudimentaire par exemple au moyen de feuilles ou classeurs Excel peu lisibles pour d'autres personnes que celles ayant conçu les plans de gestion de risques.

L'un des buts de l'invention est ainsi de proposer un procédé de gestion de risques liés à un système de transport qui puisse s'appliquer de façon cohérente à l'ensemble des systèmes de transport et qui puisse être mis en oeuvre de façon simple et peu coûteuse.

A cet effet, l'invention concerne un procédé de gestion de risques du type précité, dans lequel les étapes d'identification, de détermination et d'édition sont réalisées de façon automatisée en fonction d'informations saisies par au moins un utilisateur sur le système de transport analysé, l'étape d'élaboration de la mesure de réduction de la valeur de l'indicateur étant réalisée par ledit utilisateur.

Pour atteindre ce niveau de généricité, permettant au procédé de s'appliquer à l'ensemble des systèmes de transport, le procédé repose sur une systématisation de trois méthodes analytiques que sont la méthode inductive, la méthode déductive et le raffinement, l'ensemble étant associé à des métriques génériques pouvant être instanciées selon un contexte normatif donné.

En automatisant les étapes d'identification, de détermination et d'édition en fonction d'informations saisies par au moins un utilisateur sur le système de transport analysé, il est possible de reprendre les risques et accidents identifiés et les mesures de réduction élaborées pour un système de transport lorsque les mêmes risques et accidents s'appliquent à un autre système de transport, ce qui réduit le travail nécessaire lorsqu'un nouveau plan de gestion de risques doit être élaboré et permet d'optimiser les mesures de réduction en utilisant l'expérience acquise lors de l'établissement de plans de gestion de risques précédents. En outre, l'utilisateur impliqué dans l'établissement des plans de gestion de risque peut se consacrer principalement à la tâche dans laquelle il apporte une réelle valeur ajoutée, à savoir l'élaboration des mesures de réduction de la valeur de l'indicateur représentatif de l'occurrence ou de l'impact des risques et accidents. Ainsi, le procédé selon l'invention permet d'améliorer l'établissement de plans de gestion de risques en le rendant plus rapide, plus fiable et plus facilement exploitable par des personnes autres que celles en charge de l'établissement de ces plans.

Selon d'autres caractéristiques du procédé selon l'invention :
- l'étape d'identification de la liste de risques et accidents comprend les étapes suivantes :
   - consulter au moins une base de données contenant un tableau de formalisation des risques et accidents liés à une pluralité de systèmes de transport et un tableau de contextes et/ ou scénarios opérationnels comprenant une liste d'états de fonctionnement dans lesquels lesdits systèmes de transport sont susceptibles de se trouver,
      - identifier de façon au moins partiellement automatisée, dans ledit tableau de formalisation, les risques et accidents liés au système de transport analysé en fonction des informations sur ledit système de transport analysé saisies par l'utilisateur et en fonction des états de fonctionnement dans lesquels le système de transport analysé est susceptible de se trouver ;
   - le système de transport analysé est décomposé en sous-systèmes, eux-mêmes éventuellement décomposés en sous-systèmes, la dernière couche de sous-systèmes étant formée par des systèmes élémentaires, caractérisé en ce que le procédé comprend des étapes de raffinement au cours desquelles les étapes d'identification, de détermination et d'élaboration sont réalisées pour chaque sous-système et chaque système élémentaire du système de transport analysé ;
   - le procédé est mis en oeuvre au moyen d'une application en ligne, ladite application en ligne étant accessible aux utilisateurs en charge de gestion de risques et à d'autres utilisateurs en charge du développement et/ou de la validation du système de transport et/ou de l'exploitation du système de transport, lesdits autres utilisateurs pouvant consulter le tableau de gestion de risques et/ou renseigner la base de données ;
   - la valeur de l'indicateur représentatif de l'impact du risque ou accident est la valeur d'occurrence dudit risque ou accident ou la valeur de sévérité dudit risque ou accident ou la valeur d'un indicateur préétabli ou spécifié par un texte normatif d'un domaine industriel donné et/ou spécifique à une zone géographique ou une combinaison d'au moins certaines desdites valeurs ;
   - le procédé comprend une étape d'importation d'informations sur les exigences à satisfaire pour le système de transport analysé et/ou sur l'architecture du système de transport analysé, les risques et accidents susceptibles d'affecter le système de transport analysé étant identifiés en fonction desdites informations ;
   - le procédé comprend une étape d'importation d'informations sur des tests réalisés sur le système de transport analysé et/ou sur ses sous-systèmes et sur les résultats à ces tests, les risques et accidents susceptibles d'affecter le système de transport analysé étant identifiés et/ou les mesures de réduction de la valeur de l'indicateur représentatif de l'impact étant élaborées en fonction desdites informations ;
   - l'étape de détermination de la valeur d'indicateur tolérable comprend au moins une étape inductive d'analyse de risques et une étape déductive d'analyse de risques ;
   - au moins une partie des étapes du procédé sont effectuées à nouveau lorsque le système de transport est modifié et/ou lorsqu'un nouveau risque ou un nouvel accident est identifié, le tableau de gestion de risque étant mis à jour à l'issue des étapes nouvellement effectuées.

L'invention concerne également un système de gestion de risques pour la mise en oeuvre d'un procédé de gestion de risque tel que décrit ci-dessus, comprenant des moyens de stockage d'informations liés à des risques et accidents susceptibles d'affecter des systèmes de transport et à des états de fonctionnement desdits système de transport, des moyens de calculs de valeurs de l'indicateur représentatif de l'impact desdits risques et accidents en fonction d'un état de fonctionnement donné et de mesures de réduction de la valeur de l'indicateur, des moyens de saisie d'informations par un utilisateur et des moyens d'édition d'un tableau de gestion de risques du système de transport analysé.

Selon une autre caractéristique du système selon l'invention, les moyens de stockage et les moyens de calculs sont placés sur un serveur et accessibles à distance au moyen d'une application en ligne.

D'autres aspects et avantages de l'invention apparaîtront à la lecture de la description qui suit, donnée à titre d'exemple et faite en référence aux dessins annexés, dans lesquels :
- la Fig. 1 est une représentation schématique de l'architecture du système de gestion de risques et de son intégration dans l'architecture d'entreprise selon l'invention,
- la Fig. 2 est une représentation schématique de l'architecture fonctionnelle du système de gestion de risques selon l'invention,
- la Fig. 3 est une représentation schématique de la structure de la base de données utilisée dans le procédé de gestion de risques selon l'invention,
- la Fig. 4 est un organigramme des différentes étapes du procédé de gestion de risques selon l'invention,
- la Fig. 5 est un organigramme de l'algorithme mise en oeuvre lors d'une étape du procédé de gestion de risques de la Fig. 4, et
- la Fig. 6 est un organigramme d'un exemple d'architecture fonctionnelle utilisée dans le procédé selon l'invention.

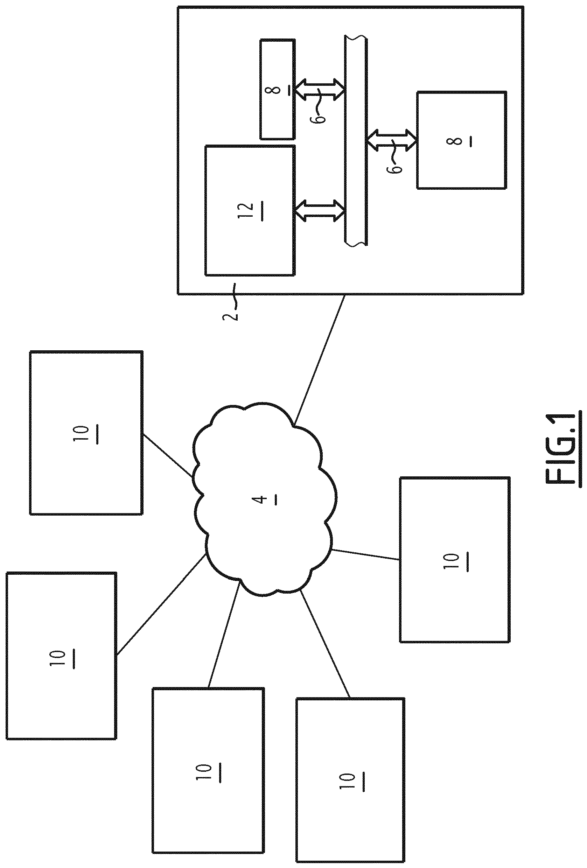

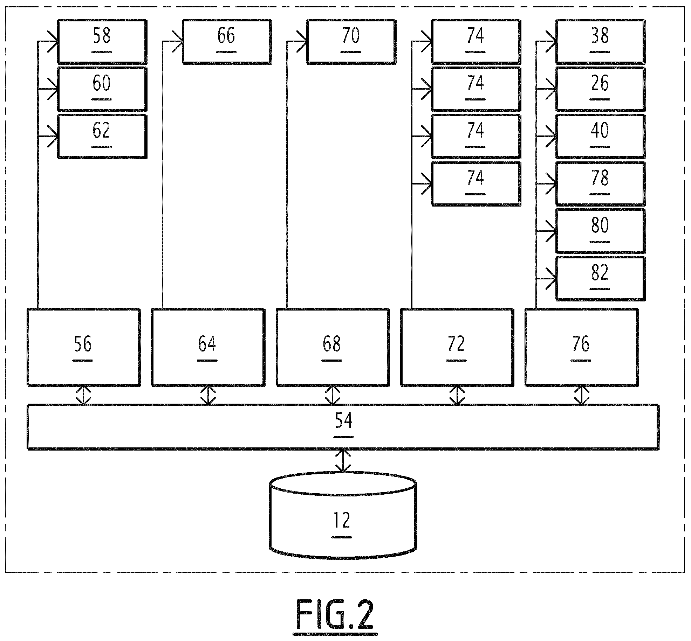

En référence aux Figs 1 et 2, on décrit un système de gestion de risques permettant la mise en oeuvre d'un procédé de gestion de risques liés à un système de transport analysé en vue de l'établissement d'un plan de gestion de risques à mettre en oeuvre lors de l'élaboration et de l'utilisation du système de transport analysé. Le système de transport analysé peut être de toute nature dans le domaine des transports terrestres, allant d'une simple pièce utilisée dans un véhicule ou dans une infrastructure de transport à un véhicule ou une infrastructure de transport dans son ensemble, ou encore l'ensemble d'un réseau de transport impliquant au moins deux véhicule et au moins une infrastructure de transport. Les systèmes de transport les plus complexes sont décomposés en sous-systèmes, qui peuvent eux-mêmes comprendre des sous-systèmes, la dernière couche de sous-systèmes étant formée par des systèmes élémentaires, par exemple les pièces élémentaires composant le système de transport. Dans ce contexte les personnes en charge des analyses doivent être en mesure de tracer et de raffiner les risques identifiés au plus haut niveau tout au long de la conception et de l'intégration des sous-systèmes du système. Ces étapes se doivent de conserver les caractéristiques des mesures de protection spécifiées au plus haut niveau. Le système et le procédé selon l'invention vont être décrits en référence à un système de transport analysé particulier, mais il est entendu que l'invention s'applique à tout système de transport et est utilisée comme système et procédé de gestions de risques de l'ensemble des systèmes de transport conçus et gérés par l'entreprise utilisant le système et le procédé selon l'invention.

Le système de gestion de risques selon l'invention repose sur une application en ligne apte à communiquer et échanger des informations avec au moins un serveur 2 de l'entreprise en charge de l'élaboration et de l'utilisation du système de transport analysé. L'application en ligne est accessible à divers employés de l'entreprise en se connectant sur le réseau interne 4, ou intranet, de l'entreprise, ce réseau étant pourvu de tous les moyens adéquats pour que l'application en ligne communique et échange des informations avec le serveur 2. Ces échanges utilisent par exemple des protocoles et formats d'échange de données structurés, tels que « JavaScript Object Notation » (Json), « Open Services for Lifecycle Collaboration » (OSLC), « Resource Description Framework » (RDF), et/ou autre et des protocoles HTTP 6 (HyperText Transfer Protocol ou protocole de transfert hypertexte) et TCP/IP (Transmission Control Protocol / Internet Protocol ou protocole de commande de transmission / protocole internet).

L'application est utilisable pour divers employés de l'entreprise, notamment les personnes 8 en charge de la gestion de risques pour l'entreprise, mais également les personnes 10 en charge du développement et/ou de l'exploitation du système de transport. Ces personnes sont par exemple les personnes en charge de l'élaboration du système de transport, des vérifications et validations des solutions techniques retenues, de la gestion des exigences du système de transport, de la gestion des modifications et de la configuration du système de transport et de l'utilisation du système de transport. Le niveau d'interaction avec l'application et les fonctions utilisables sont cependant différents selon les personnes l'utilisant, comme cela sera décrit ultérieurement. L'application se présente sous la forme d'une page internet ergonomique et interactive permettant la saisie et la consultation d'informations. L'application permet notamment de saisir des informations d'identification de l'utilisateur de l'application, ce qui déterminera le niveau d'interaction de l'utilisateur avec l'application en fonction de la qualité de l'utilisateur. De façon classique, les droits d'accès aux diverses fonctions de l'application sont déterminés en fonction de profils d'utilisateur gérés par un administrateur, qui peut créer et modifier ces profils d'utilisateur.

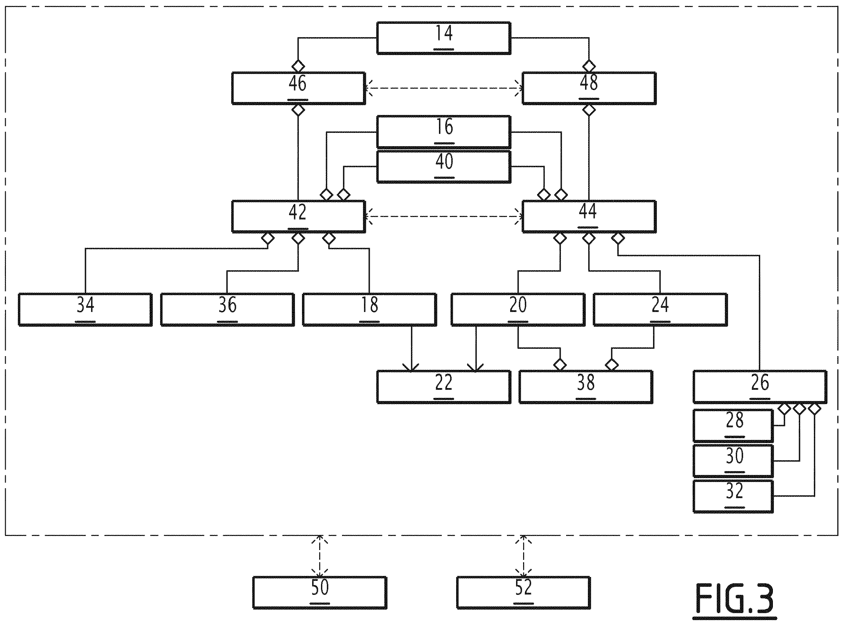

L'application communique avec une base de données 12 stockée sur le serveur 2 et regroupant les diverses informations nécessaires à l'élaboration d'un plan de gestion de risques lié au système de transport analysé ainsi que les informations générées par le procédé de gestion de risques. La structure de la base de données 12 est représentée sur la Fig. 3. Les informations sont regroupées dans des tableaux spécifiques à chaque type d'information. Ainsi, la base de données comprend les tableaux relatifs aux données suivantes :
- tableau d'utilisateurs 14 contenant des informations relatives aux utilisateurs de l'application,
- tableau d'exigences 16 contenant des informations relatives au système de transport analysé et aux sous-systèmes du système de transport analysé,
- tableau de risques techniques 18 contenant des informations relatives aux risques techniques susceptibles d'affecter le système de transport analysé et ses sous-systèmes,
- tableau de risques systèmes 20 contenant des informations relatives aux risques susceptibles d'affecter le système de transport analysé et ses sous-systèmes,
- tableau de risques 22 compilant les risques systèmes et les risques techniques susceptibles d'affecter le système de transport analysé et ses sous-systèmes,
- tableau d'accidents 24 contenant des informations relatives aux accidents susceptibles d'affecter le système de transport analysé et ses sous-systèmes,
- tableau des contextes opérationnels 26 contenant des informations relatives aux différents états de fonctionnement du système de transport analysé et de ses sous-systèmes, compilant des informations relatives au mode de fonctionnement 28, à la phase de fonctionnement 30 et à la zone de fonctionnement 32,
- tableau de fonction 34 contenant l'architecture fonctionnelle du système de transport analysé et ses sous-systèmes,
- tableau de causes 36 contenant des informations sur les causes à l'origine des risques susceptibles d'affecter le système de transport analysé et ses sous-systèmes,
- tableau de formalisation des risques et accidents 38 permettant de formaliser sous la forme d'une arborescence des risques et accidents susceptibles d'affecter le système de transport analysé et ses sous-systèmes,
- tableau de mesures de réduction 40 contenant des informations relatives aux mesures de réduction de la valeur d'au moins un indicateur représentatif de l'importance des risques et accidents susceptibles d'affecter le système de transport analysé et ses sous-systèmes,
- tableau d'objets d'analyse des risques système 42 compilant les informations des tableaux de fonction 34, de causes 36, de risques techniques 18 , de mesures 40 et d'exigences 16,
- tableau d'objets d'analyse préliminaire des risques 44 compilant les informations des tableaux de risques système 20, d'accidents 24, opérationnel 26, de mesures 40 et d'exigences 16,
- table des modèles dysfonctionnels 46 intégrant au niveau système les analyses de risques menées sur chaque sous-système, et gérant les versions desdits modèles,
- modèle des scénarios d'accidents 48 intégrant les analyses préliminaires de risques 44, gérant les versions desdites analyses et compilant les informations de traçabilité et de raffinement vers les modèles dysfonctionnels 46 ,
- tableau représentant le registre de suivi des risques 50, et
- tableaux d'autres éléments techniques 52 contenant des informations sur les éléments techniques nécessaires à la réalisation des tableaux ci-dessus.

Les tableaux comprennent également les données concernant les informations ci-dessus relatives à tous les autres systèmes de transport précédemment analysés de sorte que ces informations sont accessibles pour l'élaboration d'un nouveau plan de gestion de risques relatif au système de transport analysé.

Un logiciel permet de croiser les différents tableaux de la base de données afin de réaliser les étapes du procédé selon l'invention, comme indiqué par les flèches de la Fig. 3 et comme cela sera décrit ultérieurement.

La base de données est renseignée de diverses façons en fonction de la nature des informations. Certaines des informations sont saisies directement par les utilisateurs de l'application et d'autres sont établies de façon automatique à partir des informations saisies au moyen d'algorithmes de traitement des informations saisies. Les informations sont saisies par les employés en possession de ces informations en fonction du domaine dans lequel ces employés sont qualifiés. Ainsi, à titre d'exemple, les informations relatives aux exigences du système de transport et de ses sous-systèmes alimentant le tableau d'exigences 16 sont saisies au moins par les personnes en charge de l'élaboration du système de transport et cela en dehors de l'application décrite ici. Le contenu du tableau de fonction 34 est quant à lui alimenté par les équipes chargées de la conception du système analysé et ses sous-systèmes. Pour ce type d'information des moyens logiciels sont mis en place sur l'application afin de pouvoir rapatrier ou importer de manière automatique ces informations.

Les informations saisies comprennent notamment les informations relatives à l'identification de l'utilisateur, les informations sur les spécifications du système de transport, ses sous-systèmes et ses composants, les informations sur la conception de l'architecture du système de transport, ses sous-systèmes et ses composants, les informations sur l'utilisation du système de transport au cours de son fonctionnement, les informations sur les campagnes de test et de validation du système de transport, ses sous-systèmes et ses composants, et les informations sur les modifications ou requête(s) de changement portant sur au moins l'un des éléments précédents.

La Fig. 2 représente la structure du système de gestion de risques de l'invention et les interactions entre l'application et la base de données 12. Une couche d'abstraction des données 54 interagit avec la base de données 12 afin de convertir les informations de la base de données en données exploitables par l'application, en fournissant une interface unifiée vers les modules applicatifs basée sur des représentations métiers et ce indépendamment de l'implantation des bases de données. En d'autres termes, des informations contenues dans la base de données sous des formes multiples sont réarrangées pour se présenter sous un format exploitable par l'application. A titre exemple, la couche d'abstraction de données 54 permet de projeter une architecture fonctionnelle structurée initialement sous forme d'un graphique hiérarchique et orienté flot de données vers une vue arborescente de fonctions. Cette dernière représentation étant plus adaptée et plus facile à prendre en main dans le cadre d'analyse de type « analyses des modes de défaillance, de leurs effets et de leur criticité » (AMDEC). La couche d'abstraction 54 interagit avec une pluralité de modules formant les outils de l'application et qui vont être à présent décrits. Chaque module comprend une interface permettant la saisie de commandes pour réaliser les opérations prévues par le module et la visualisation d'informations de sorte à rendre chaque module ergonomique.

Le système de gestion de risques comprend un module principal 56 gérant la page d'accueil de l'utilisateur de l'application, son profil et le portail vers les autres modules de l'application. Ce module principal 56 permet, après identification de l'utilisateur, de visualiser et d'accéder aux différents autres modules de l'application en fonction des droits d'accès de l'utilisateur, comme représenté par la fenêtre 58, de consulter le profil de l'utilisateur comme représenté par la fenêtre 60 et de visualiser diverses notifications, tels que des alertes, des informations sur la mise à jour de plans de gestion de risques, etc., comme représenté par la fenêtre 62.

Le système de gestion de risques comprend un module de gestion des exigences du système de transport analysé 64 permettant de manipuler les informations relatives aux exigences auxquelles doivent satisfaire le système de transport analysé et ses sous-systèmes. Ce module 64 permet notamment de créer de nouvelles exigences, importer des exigences déjà renseignées dans un système distant de gestion d'exigences, exporter les exigences vers un système distant de gestion d'exigences en vue de leur prise en compte par les équipes de conception du système, visualiser et éditer les informations sur les exigences du système de transport analysé, comme représenté par la fenêtre 66 et trier les exigences selon différents critères de recherche afin de faciliter leur visualisation.

Le système de gestion de risques comprend un module de scénario d'accident 68 permettant principalement de réaliser des analyses préliminaires de risques, comme cela sera décrit ultérieurement en relation avec le procédé selon l'invention. Le module permet également de visualiser les analyses réalisées, comme représenté par la fenêtre 70.

Le système de gestion de risque comprend un module de dysfonctionnements 72 permettant principalement de réaliser des analyses déductives et des activités de raffinement. Le support méthodologique s'apparente à des analyses des modes de défaillance, de leurs effets et de leur criticité (AMDEC). Ce support étant paramétrable il permet l'analyse de risques du système de transport analysé et de ses sous-systèmes, de risques relatifs aux interfaces des sous-systèmes et de risques relatifs aux composants du système de transport, comme cela sera décrit ultérieurement en relation avec le procédé selon l'invention. Le module permet également de visualiser les analyses réalisées, comme représenté par les fenêtres 74. Le module permet également d'intégrer les analyses AMDEC avec les scénarios d'accidents, en interprétant les effets d'une défaillance en termes de situation dangereuse ou risque ou accident ou défaillance d'un niveau supérieur.

Le système de gestion de risques comprend un module de ressources 76, permettant la gestion des ressources élémentaires nécessaires à l'élaboration de plans de gestion de risques, comme cela sera décrit ultérieurement en relation avec le procédé selon l'invention. Ce module permet la création, la génération, l'édition et la visualisation de tableaux de formalisation des risques et accidents 38, contextes opérationnels 26, de mesures de réduction 40, de matrices de risques 78, de tableaux de probabilités 80 et de sévérité 82, de patron d'analyse préliminaire et AMDEC.

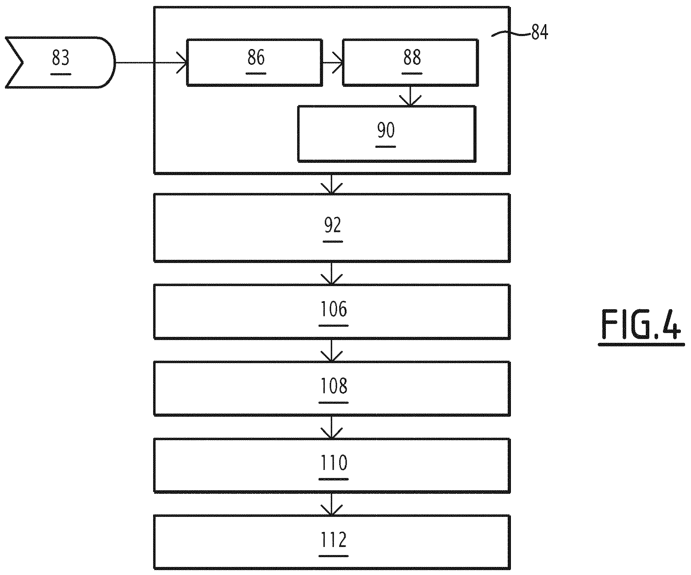

En référence à la Fig. 4, on décrit à présent le procédé de gestion des risques liés à un système de transport analysé mettant en oeuvre le système de gestion de risques décrit ci-dessus. Le procédé sera tout d'abord décrit pour la génération d'un plan de gestions de risques pour un nouveau système de transport, dit système de transport analysé, et représenté par la référence numérique 83 sur la Fig. 4.

Le procédé de gestion de risques comprend une étape initiale, représentée par la référence 84, préalable à toutes les analyses réalisées lors du procédé. Cette phase étape initiale permet de générer les informations qui seront utilisées au cours des étapes d'analyse subséquentes. Elle fait intervenir notamment le module de ressources 76 et utilise les informations sur le système de transport analysé, et notamment les informations relatives aux exigences du système de transport et de ses sous-systèmes situées dans le tableau d'exigences 16.

Le module de ressources 76 récupère la librairie des risques et accidents susceptibles d'affecter un système de transport sous la forme du tableau de formalisation des risques et accidents 38, comme représenté par la référence numérique 86. Le module de ressources 76 récupère également la librairie des états de fonctionnement dans lesquels peut se trouver un système de transport sous la forme du tableau des contextes opérationnels 26, comme représenté par la référence numérique 88. Le système de gestion génère également de façon automatique les outils dont il aura besoin pour réaliser les analyses subséquentes, tels que des tableaux de probabilité, des matrices de risques, des tableaux de correspondances entre des indicateurs de sécurité (taux d'occurrence acceptable et niveau de sécurité), tableau de facteurs de réduction de risques, comme représenté par la référence numérique 90.

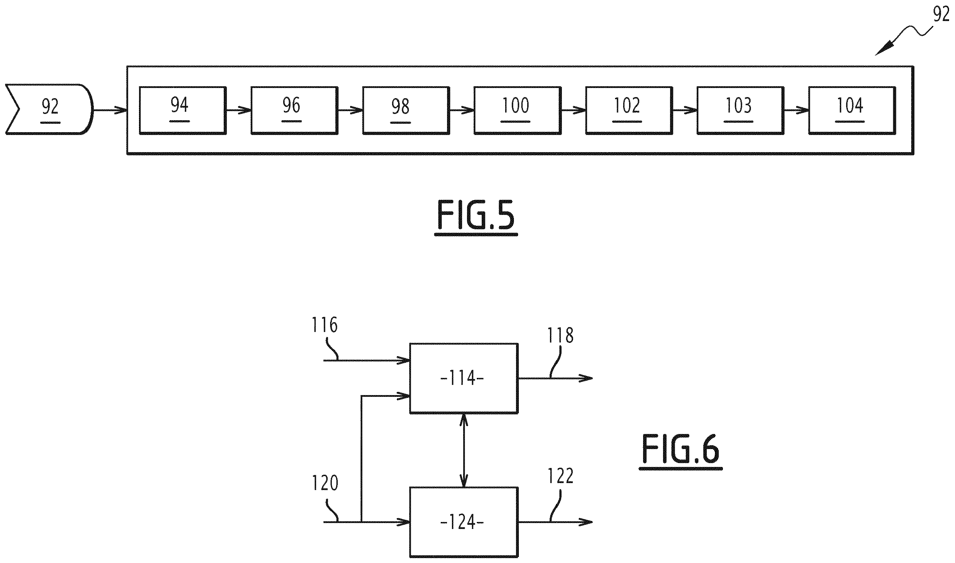

A partir des éléments ci-dessus, le système de gestion de risque réalise une analyse préliminaire de risques sous forme d'une analyse inductive, comme représenté par la référence numérique 92, les étapes de cette analyse étant représentées sur la Fig. 5. Cette étape est réalisée au moyen du module de scénario d'accident 68.

Ce module récupère les informations sur le système de transport analysé, notamment sur ses sous-systèmes et ses composants, à partir des informations du tableau d'exigence 16 utilisant le module de gestion des exigences du système de transport analysé 64 au cours de l'étape 94. Ce tableau recense les exigences auxquelles le système de transport analysé doit répondre et les spécifications du système de transport analysé, ses sous-systèmes et ses composants.

A partir de ces informations, le système de gestion de risque identifie, au moins en partie de façon automatisée, les risques et accidents susceptibles d'affecter le système de transport analysé au cours de l'étape 96. Par « de façon automatisée », on entend que cette étape est réalisée par un algorithme générant comme résultat, à partir des informations entrées et des informations contenues dans la librairie des risques et accidents susceptibles d'affecter un système de transport, une liste des risques et accidents susceptibles d'affecter le système de transport analysé. Plus précisément, à partir des informations sur le système de transport analysé, à partir des informations du tableau d'exigence 16 et à partir des informations contenues dans le tableau de risques 22 et dans le tableau d'accidents 24 de la base de données 12 regroupant les risques et accidents identifiés pour d'autres systèmes de transport, l'algorithme génère la liste des risques et accidents susceptibles d'affecter le système de transport analysé. Cette analyse est donc inductive en ce qu'elle permet d'identifier les causes et les situations dangereuses en partant d'une connaissance préalable des accidents susceptibles d'affecter le système de transport analysé et de leur conséquence.

Le résultat de ces identifications se présente sous la forme d'un tableau de formalisation des risques et accidents 38 pour le système de transport analysé recensant de façon formelle tous les risques et accidents susceptibles d'affecter le système de transport analysé. Il est entendu que ce tableau 38 peut être mis à jour si de nouveaux risques ou accidents sont identifiés au cours du fonctionnement ou de la conception du système de transport analysé ou au cours du fonctionnement d'autres systèmes de transport. Dans ce cas, les tableaux de risques 22 et d'accidents 24 sont mis à jour, par exemple par les personnes en charge de l'exploitation des systèmes de transport et l'algorithme est relancé pour mettre à jour le tableau de formalisation des risques et accidents 38 de sorte à tenir compte de ces nouvelles informations.

Le système de gestion génère également au moins en partie de façon automatique, à partir des informations sur le système de transport analysé, à partir des informations du tableau d'exigence 16, à partir des résultats de l'étape 96, l'association entre les accidents ou risques et les états de fonctionnement dans lequel peut se trouver le système de transport analysé, au cours de l'étape 98. L'élaboration de ces états repose également sur l'utilisation des informations de la base de données sur les systèmes de transport déjà analysés pour lesquels les états de fonctionnement ont été identifiés et les associations déjà établies. Le tableau opérationnel 26 peut également être mis à jour lorsque de nouvelles informations sont introduites dans la base de données.

Au cours de l'étape 100, le système de gestion détermine, de façon automatique, pour chaque accident et risque identifié, au moins une valeur d'au moins un indicateur représentatif de l'impact dudit risque ou accident en fonction d'un état de fonctionnement donné du système de transport analysé, ainsi qu'une valeur d'indicateur tolérable en dessous de laquelle l'innocuité du système de transport peut être démontrée. Un tel indicateur est par exemple l'occurrence du risque ou accident identifié en fonction de l'état de fonctionnement dans lequel se trouve le système de transport analysé. Dans ce cas, la valeur d'indicateur tolérable est une valeur d'occurrence en dessous de laquelle on considère que le système de transport fonctionne de manière sûre. Ainsi, on considère par exemple que lorsqu'un risque ou accident se produit à une fréquence inférieure à une fréquence acceptable, ce risque ou accident ne présente pas un danger significatif. Cette étape de détermination est par exemple réalisée de façon automatique au moyen de matrices d'acceptabilité du risque. L'algorithme permet ainsi d'associer à chaque risque et accident identifié, une valeur de l'indicateur représentatif de l'impact dudit risque ou accident et une valeur d'indicateur tolérable et de comparer ces deux valeurs afin de déterminer si la valeur de l'indicateur représentatif de l'impact est supérieure à la valeur d'indicateur tolérable. D'autres exemples d'indicateurs représentatifs de l'impact sont la valeur de sévérité dudit risque ou accident ou la valeur d'un indicateur préétabli ou spécifié par un texte normatif d'un domaine industriel donné et/ou spécifique à une zone géographique ou une combinaison d'au moins certaines de ces valeurs.

Au cours d'une étape 102, lorsque la valeur de l'indicateur représentatif est supérieure à la valeur d'indicateur tolérable, le procédé comprend une étape d'élaboration d'au moins une mesure de réduction de la valeur de l'indicateur représentatif de l'impact, dont la mise en oeuvre permet de réduire la valeur dudit indicateur dudit risque et accident. Cette étape peut être réalisée de façon automatique lorsque le risque ou accident identifié est déjà connu et lorsqu'une mesure appropriée a déjà été efficacement élaborée. Lorsque cette mesure n'est pas encore connue ou n'a pas démontré son efficacité ou n'est pas disponible dans l'état de fonctionnement courant, la personne en charge de la gestion de risques élabore cette mesure et renseigne la base de données 12 en conséquence afin de générer le tableau de mesures de réduction 40. Au cours de cette étape 102, l'utilisateur présente une forte valeur ajoutée et peut utiliser son expertise pour élaborer les mesures de réduction les plus efficaces possibles afin que la valeur de l'indicateur représentatif de l'impact d'un risque ou accident devienne inférieure ou égale à la valeur d'indicateur tolérable déterminée pour ce risque ou accident. Cette mesure sera spécifiée à l'aide d'exigences portant sur le système analysé, ou sur les moyens de conception mis en oeuvre, ou sur les procédures d'utilisation du système ou sur des contraintes exportées vers d'autres systèmes. Un exemple de contrainte exportée peut être, dans le domaine ferroviaire, de considérer un système de train autonome dans un contexte où l'un des véhicules subit une panne et doit être secouru/remorqué par une locomotive apte au dépannage et ne faisant pas partie dudit système autonome. Dans ce cas, la locomotive de dépannage doit se coupler au véhicule en panne et prendre à sa charge les contraintes de sécurité initialement allouées à ce dernier.

A l'issue de cette étape et au cours d'une étape de suivi des risques 103, le système de gestion du risque génère automatiquement un registre de suivi des risques associant le risque ou l'accident, les exigences spécifiant la mesure de réduction du risque et les mesures de couverture (tests, vérifications, etc.) mis en oeuvre pour s'assurer de la bonne implantation de la mesure de réduction. A l'issue de cette étape et au cours d'une étape 104, un tableau ou plan de gestion de risques du système de transport analysé est édité de façon automatique, ledit tableau associant à chaque risque et accident identifié, l'état de fonctionnement, la mesure de réduction de la valeur de l'indicateur et la valeur dudit indicateur dudit risque et accident obtenue en fonction de la mesure de réduction, les exigences spécifiant la mesure de réduction et la version de l'analyse. Dans le cas d'un indicateur relatif à l'occurrence du risque ou accident identifié, la mesure de réduction vise à réduire la fréquence d'occurrence du risque ou accident.

Ce tableau est ensuite rendu accessible dans l'application de gestion de risques et permet de vérifier l'exhaustivité de l'analyse, de partager les exigences applicables avec les personnes en charge de la conception du système de transport analysé et de partager les scénarios d'accidents qui seront tracés et raffinés dans les analyses 106 et 108, décrites ci-dessous

Le système selon l'invention réalise également une analyse déductive de risques du système 106 au moyen du module de dysfonctionnements 72 implantant une méthodologie de type AMDEC. Les étapes mises en oeuvre dans ce procédé sont les suivantes :
A partir de l'architecture fonctionnelle du système fournie par la table 34, des exigences du système 16, des informations (patron d'analyse, barrières) du module de ressources 76, de l'analyse préliminaire des risques 92, le système génère automatiquement, au moins en partie, une table AMDEC.
A l'issu de cette étape, l'utilisateur peut éditer les lignes de la table AMDEC :
- associer un effet système représenté par un risque ou un accident à une défaillance identifiée
- associer une barrière de réduction du risque sur la cause et/ou une barrière de réduction du risque sur l'effet
- associer des exigences spécifiant la ou les mesures de réduction du risque
Le système vérifie automatiquement pour chaque ligne de l'AMDEC que la valeur de l'indicateur tolérable héritée de l'effet système est correctement couverte par la ou les barrières associées à la défaillance.
A l'issue de ces étapes, le système met à jour le registre de suivi des risques, et met à disposition le résultat des analyses qui seront tracées et raffinées au niveau des analyses sous-systèmes 110.

De façon sensiblement similaire à ce qui a été décrit pour l'analyse déductive de risque 106, le système selon l'invention réalise également des analyses de risques liés aux interfaces du système 108 au moyen du module de dysfonctionnements 72 implantant une méthodologie de type AMDEC. Les étapes sont identiques à celle décrites pour l'analyse déductive de risques du système 106 hormis le fait que le système se base sur la définition des interfaces du système et non sur son architecture fonctionnelle afin de générer la table AMDEC.

De façon sensiblement similaire à ce qui a été décrit pour l'analyse déductive de risque 106, le système selon l'invention réalise également des analyses de risques des sous-systèmes 110 au moyen du module de dysfonctionnements 72. Les défaillances des sous-systèmes ont pour effet des défaillances des fonctions du système ou des défaillances des interfaces du système, le système de gestion du risque vérifie automatiquement que les moyens de protections (barrières) sont correctement alloués et raffinés dans les sous-systèmes. Cette étape de raffinement permet donc de s'assurer que les analyses faites pour le système de transport analysé sont cohérentes avec les analyses faites pour chacun des sous-systèmes du système de transport, ces analyses étant faites pour tous les sous-systèmes, jusqu'aux systèmes élémentaires.

Les résultats des analyses ci-dessus sont compilés afin de certifier que les hypothèses posées lors de l'analyse préliminaire sur les taux tolérables d'accident sont atteints par le système conçu et les résultats sont rendus accessibles de façon à former un plan de gestion de risques consultable par toutes les équipes participant à la conception du système de transport.

Ce plan de gestion est mis à jour à chaque requête de changement applicable au système de transport et impactant les analyses menées, par exemple lorsque le système de transport est modifié ou lorsque de nouvelles exigences doivent être satisfaites ou encore lorsqu'un nouveau risque ou accident est identifié. Dans l'un de ces cas, l'application procède à une analyse d'impact en se basant sur les liens de traçabilité existant entre objets de la base de données, les analyses pertinentes sont à nouveau réalisées sur les objets impactés et le plan de gestion est mis à jour en conséquence. Des alertes peuvent alors être émises afin d'informer les personnes concernées de cette mise à jour.

L'invention va à présent être expliquée au moyen d'un exemple concret de système de transport à analyser. L'exemple concerne le domaine ferroviaire et porte sur un système de signalisation de métro automatique.

Dans cet exemple est proposé : la définition concrète des objets manipulés, la définition des différents indicateurs, les patrons d'analyses, les éléments pour la traçabilité et le raffinement du risque ainsi que des exemples d'accidents, de contextes opérationnels, de défaillances et autres. L'exemple se limitera volontairement aux deux premières étapes du procédé.

Le tableau suivant donne un exemple de classification d'accidents liés à des situations dangereuses:

| **Classe d'accident** | **Accident** | **Sévérité de l'accident** | **Taux d'occurrence de l'accident (AR)** | **Risque sur la voie** | **Risque technique** |
|---|---|---|---|---|---|
| **1.Choc avec un passager ou un employé de maintenance** | **Chute sur les rails** | Catastrophique | rare | **portes sur le quai ouvertes sans train en station** | **mauvaises détection et localisation du train** |
| **2. Choc avec un passager ou un employé de maintenance** | **Le passage peut être coincé entre les portes sur le quai et letrain** | Catastrophique | Occasionnel | **Les portes du train sont ouvertes mais les portes sur le quai sont fermées** | **Les portes du train sont ouvertes mais les portes sur le quai sont fermées** |

Les barrières permettant de limiter la fréquence des accidents ci-dessus sont par exemple :
- le système de protection du train
- la procédure d'installation
- la procédure de maintenance
- l'infrastructure (porte palière, capteur de présence ou autre)

Les contextes opérationnels dans lesquels ces accidents peuvent survenir sont par exemple formés par une combinaison des champs suivant :
- Mode de fonctionnement du train : automatique, contrôlé, non communicant (dégradé)...
- Phase dans laquelle se trouve le train : en opération, en maintenance, à l'arrêt...
- Zone ou localisation du train : dépôt, tunnel, à quai, en station...

L'indicateur représentatif de l'impact de l'accident est par exemple le TAR (tolerable accident rate ou taux d'accident tolérable). Ce taux se définit à partir du taux d'occurrence de l'accident et de sa sévérité, donnés dans le tableau précédent. Par exemple un accident ayant une sévérité catastrophique et un taux occasionnel (10⁻⁵/h, c'est-à-dire un accident se produisant à une fréquence de 0,00001 fois par heure) est inacceptable et le but à atteindre est un taux acceptable d'occurrence supérieur à 10⁻⁹/h.

Le tableau suivant donne un exemple d'une matrice de tolérance du risque capturée et interprétée dans le système de gestion de risque :

| Matrice de tolérance du risque | | | Catégorie de sévérité | | | |
|---|---|---|---|---|---|---|
| | TAR | | catastrophique | critique | marginal | insignifiant |
| Catégorie de fréquence | fréquent | supérieur à 10⁻¹/h | inacceptable | inacceptable | inacceptable | inacceptable |
| | probable | compris entre 10^{- 3}/h et 10⁻¹/h | inacceptable | inacceptable | inacceptable | indésirable |
| | occasionnel | compris entre 10⁻⁵/h et 10⁻³/h | inacceptable | inacceptable | indésirable | tolérable |
| | exceptionnel | compris entre 10⁻⁷/h et 10⁻⁵/h | inacceptable | indésirable | tolérable | négligeable |
| | improbable | compris entre 10⁻⁹/h et 10⁻⁷/h | indésirable | tolérable | négligeable | négligeable |
| | incroyable | inférieur ou égal à 10⁻⁹/h | tolérable | négligeable | négligeable | négligeable |

Le THR (tolerable hazard rate ou taux de risque tolérable) se définit comme le taux de risque résiduel suite à la combinaison du TAR et d'un RRF (risque réduction factor ou facteur de réduction de risque), qui se définit par une combinaison de l'efficacité de la barrière et des conditions spécifiques du contexte opérationnel.

A titre d'exemple, dans le contexte « en opération, en station, et mode automatique », le RRF de la barrière « système de protection du train » est au niveau « exceptionnel » (facteur 10⁵).

On décrit ci-dessous un exemple de scénario d'accident déduit de l'analyse inductive :
On considère l'accident (1) du tableau de classification d'accidents dans le contexte « en opération, en station, et mode automatique ». La tolérance du risque est alors inacceptable selon la matrice de tolérance du risque et le TAR doit atteindre le niveau « incroyable ». En associant la barrière « système de protection du train », nous obtenons un THR de 10⁻⁵/h alloué à la situation dangereuse « donnée de localisation train erronée ». Une exigence typique associée à la barrière dans ce scénario est : « le système de protection du train doit s'assurer que les portes palières et les portes du train sont bien alignées », cette exigence est au niveau maximal de sécurité (SIL4 selon les normes ferroviaires).

Au cours du déroulement de l'analyse inductive le système de gestion réalise de façon automatique les opérations suivantes:
- Pré-remplissage des scénarios : accidents, situation dangereuse, caractéristiques (sévérité, taux, taux acceptable).
- Association potentielles de contextes et de barrières applicables en se basant sur des associations préexistantes
- Calculs du THR, niveau de sécurité des exigences
- Mise en forme de ces informations pour un utilisateur humain
- Vérification de l'exhaustivité des scénarios

Le système de gestion prend aussi à sa charge de façon automatique les opérations suivantes :
- Import des exigences du système
- Import des scénarios opérationnels issus des spécifications du système (permet d'inférer des associations entre contexte et barrière)
- Export vers un référentiel d'exigences distant (par exemple IBM Doors) des nouvelles exigences issues de la spécialisation des barrières
- Export vers un référentiel d'exigences distant des « contraintes exportés » identifiées pour les parties prenantes (autres systèmes, opérateurs du système...)
- Export d'un modèle formel et simulable des scénarios d'accidents sous forme de système de transition (par exemple automate en langage Altarica...)
- Export de l'analyse sous forme d'une table formatée pour les besoins de certification

La deuxième étape consiste à mener l'analyse déductive en se basant sur l'architecture fonctionnelle du système analysé, les exigences fonctionnelles, un patron d'analyse AMDEC, un ensemble de barrières connues et l'analyse inductive décrite ci-dessous.

Un exemple d'architecture fonctionnelle est donné à la Fig. 6, dans laquelle les références numériques 114, 116, 118, 120, 122 et 124 désignent respectivement la fonction de protection des portes (114), l'entrée de localisation de train (116), la sortie de contrôle des portes (118), l'entrée des états des portes (120), la sortie de commande des portes (122) et la fonction de commande des portes (124). Les fonctions de protection des portes 114 et de commande des portes 124 forment les sous-fonctions d'une fonction racine désignée par les termes : « fonction de gestion des portes du train ».

L'analyse AMDEC se caractérise par l'application d'un patron de défaillance basé sur des états dysfonctionnels prédéfinis des sorties de chaque fonction. Par exemple, les états prédéfinis peuvent être « erroné », « vide », « trop tard » etc...

Le système de gestion de risque pré-remplit de façon automatique la table d'analyse en parcourant l'ensemble des fonctions et, pour chaque fonction atomique, établir les modes de défaillance en appliquant pour chaque sortie les états dysfonctionnels préétablis, comme représenté dans le tableau ci-dessous, à titre d'exemple pour certains modes de défaillance uniquement :

| **fonction** | **sortie** | **mode de défaillance** |
|---|---|---|
| **F1** fonction de gestion des portes du train | | |
| **F1.1** Fonction de commande des portes du train | | |
| **F1.1** | Sortie de commande des portes | Sortie de commande des portes est erronée |
| **F1.1** | Sortie de commande des portes | Sortie de commande des portes est vide |
| **F1.2** Fonction de protection des portes du train | | |
| **F1.2** | Sortie de contrôle des portes | Sortie de contrôle des portes est erronée |
| **F1.2** | Sortie de contrôle des portes | Sortie de contrôle des portes est vide |

Il s'agit ensuite d'associer à chaque mode de défaillance un impact système. Cela se traduit par la sélection d'un scénario issu de l'analyse inductive. Dans cet exemple, les défaillances de la fonction de commande seront tracées vers la situation dangereuse « Les portes du train sont ouvertes mais les portes du quai sont fermées », les défaillances de la fonction de protection seront tracées vers la défaillance de la barrière du scénario.

En se basant sur cette association et sur le niveau de sécurité alloué aux fonctions, le système de gestion de risque vérifie que le THR sur la situation dangereuse est atteint. Dans le cas contraire, la personne en charge de la gestion de risque devra spécifier une barrière de protection sur la cause de la défaillance (par exemple se protéger d'un calcul erroné). Dans le cas d'une défaillance impactant une barrière, le système de gestion du risque vérifie que le niveau de sécurité alloué à la fonction est compatible avec l'efficacité de la barrière spécifié dans l'analyse inductive. Dans le cas contraire, Le système de gestion du risque proposera le niveau de sécurité minimale requis pour assurer la compatibilité.
Au cours du déroulement de l'analyse déductive le système de gestion réalise de façon automatique les opérations suivantes :- Pré-remplissage des analyses AMDEC : fonctions, modes de défaillances (mdd)
- Associations potentielles des mdd et des impacts système en se basant sur des associations préexistantes
- Vérification du THR et niveau de sécurité des exigences et des fonctions
- Vérification du niveau d'efficacité de la barrière sur la cause
- Mise en forme de ces informations pour un utilisateur humain
- Vérification de l'exhaustivité de l'analyse AMDEC
- Vérification de la complétude de l'analyse déductive au regard de l'analyse inductive et réciproquement (couverture totale)

Le système de gestion prend aussi à sa charge de façon automatique les opérations suivantes :
- Import des exigences et de l'architecture fonctionnelle du système
- Import des liens de traçabilité entre les fonctions et les scénarios opérationnels issu des spécifications du système (permet d'inférer des associations entre mdd et scénario d'accident)
- Export vers un référentiel d'exigences distant (par exemple IBM Doors) des nouvelles exigences issues de la spécialisation des barrières ou des nouveaux niveaux de sécurité
- Export d'un modèle formel et simulable du comportement dysfonctionnel des fonctions sous forme de système de transition (par exemple automate en langage Altarica...)
- Export de l'analyse sous forme de table formatée pour les besoins de certification

L'invention décrite ci-dessus permet de réaliser des plans de gestion de risque de façon cohérente et formalisée quel que soit le système ferroviaire analysé. De plus, en alimentant systématiquement la base de données, la plupart des étapes du procédé de gestion de risques peuvent être réalisées de façon automatique et en ne faisant intervenir les personnes en charge de la gestion de risque que lorsque leur expertise est nécessaire, ce qui permet des gains de temps et d'efficacité et une réduction des coûts liés à la gestion de risque.

## Revendications

1. Procédé de gestion des risques liés à un système de transport terrestre analysé, ledit procédé étant mis en oeuvre par un système de gestion de risques comprenant des moyens de stockage d'informations liés à des risques et accidents susceptibles d'affecter des systèmes de transport et à des états de fonctionnement desdits système de transport, des moyens de calculs de valeurs de l'indicateur représentatif de l'impact desdits risques et accidents en fonction d'un état de fonctionnement donné et de mesures de réduction de la valeur de l'indicateur, des moyens de saisie d'informations par un utilisateur et des moyens d'édition d'un tableau de gestion de risques du système de transport analysé, ledit procédé comprenant les étapes suivantes :
- identifier (96, 98) une liste de risques et d'accidents susceptibles d'affecter le système de transport analysé en fonction d'un état de fonctionnement donné du système de transport et, pour chaque risque et accident identifié, une valeur d'au moins un indicateur représentatif de l'impact dudit risque ou accident,
- déterminer (100) pour chaque risque et accident identifié une valeur d'indicateur tolérable en dessous de laquelle l'innocuité du système de transport peut être démontrée,
- élaborer (102) pour au moins une partie des risques et accidents identifiés au moins une mesure de réduction de la valeur de l'indicateur représentatif de l'impact, dont la mise en oeuvre permet de réduire la valeur dudit indicateur dudit risque et accident lorsque ladite valeur dudit indicateur est supérieure à la valeur d'indicateur tolérable, de sorte que ladite valeur dudit indicateur devient inférieure ou égale à la valeur d'indicateur tolérable associée audit risque et accident,
- éditer (104) un tableau de gestion de risques du système de transport analysé, ledit tableau associant à chaque risque et accident identifié la mesure de réduction de la valeur de l'indicateur et la valeur dudit indicateur dudit risque et accident obtenue en fonction de la mesure de réduction,
**caractérisé en ce que** les étapes d'identification, de détermination et d'édition sont réalisées de façon automatisée en fonction d'informations saisies par au moins un utilisateur sur le système de transport analysé, l'étape d'élaboration de la mesure de réduction de la valeur de l'indicateur étant réalisée par ledit utilisateur.

2. Procédé de gestion de risques selon la revendication 1, **caractérisé en ce que** l'étape d'identification de la liste de risques et accidents comprend les étapes suivantes :
- consulter au moins une base de données (12) contenant un tableau de formalisation des risques et accidents (38) liés à une pluralité de systèmes de transport et un tableau de contextes et/ ou scénarios opérationnels (26) comprenant une liste d'états de fonctionnement dans lesquels lesdits systèmes de transport sont susceptibles de se trouver,
- identifier de façon au moins partiellement automatisée, dans ledit tableau de formalisation (38), les risques et accidents liés au système de transport analysé en fonction des informations sur ledit système de transport analysé saisies par l'utilisateur et en fonction des états de fonctionnement dans lesquels le système de transport analysé est susceptible de se trouver.

3. Procédé de gestion selon la revendication 1 ou 2, dans lequel le système de transport analysé est décomposé en sous-systèmes, eux-mêmes éventuellement décomposés en sous-systèmes, la dernière couche de sous-systèmes étant formée par des systèmes élémentaires, **caractérisé en ce que** le procédé comprend des étapes de raffinement au cours desquelles les étapes d'identification, de détermination et d'élaboration sont réalisées pour chaque sous-système et chaque système élémentaire du système de transport analysé.

4. Procédé de gestion de risques selon l'une quelconque des revendications 2 ou 3, **caractérisé en ce que** le procédé est mis en oeuvre au moyen d'une application en ligne, ladite application en ligne étant accessible aux utilisateurs en charge de gestion de risques et à d'autres utilisateurs en charge du développement et/ou de la validation du système de transport et/ou de l'exploitation du système de transport, lesdits autres utilisateurs pouvant consulter le tableau de gestion de risques et/ou renseigner la base de données (12).

5. Procédé de gestion de risques selon l'une quelconque des revendications 1 à 4, **caractérisé en ce que** la valeur de l'indicateur représentatif de l'impact du risque ou accident est la valeur d'occurrence dudit risque ou accident ou la valeur de sévérité dudit risque ou accident ou la valeur d'un indicateur préétabli ou spécifié par un texte normatif d'un domaine industriel donné et/ou spécifique à une zone géographique ou une combinaison d'au moins certaines desdites valeurs.

6. Procédé de gestion de risques selon l'une quelconque des revendications 1 à 5, **caractérisé en ce qu'**il comprend une étape d'importation d'informations sur les exigences à satisfaire pour le système de transport analysé et/ou sur l'architecture du système de transport analysé, les risques et accidents susceptibles d'affecter le système de transport analysé étant identifiés en fonction desdites informations.

7. Procédé de gestion selon l'une quelconque des revendications 1 à 6, **caractérisé en ce qu'**il comprend une étape d'importation d'informations sur des tests réalisés sur le système de transport analysé et/ou sur ses sous-systèmes et sur les résultats à ces tests, les risques et accidents susceptibles d'affecter le système de transport analysé étant identifiés et/ou les mesures de réduction de la valeur de l'indicateur représentatif de l'impact étant élaborées en fonction desdites informations.

8. Procédé de gestion de risques selon l'une quelconque des revendications 1 à 7, **caractérisé en ce que** l'étape de détermination de la valeur d'indicateur tolérable comprend au moins une étape inductive d'analyse de risques et une étape déductive d'analyse de risques.

9. Procédé de gestion de risques selon l'une quelconque des revendications 1 à 8, **caractérisé en ce qu'**au moins une partie des étapes du procédé sont effectuées à nouveau lorsque le système de transport est modifié et/ou lorsqu'un nouveau risque ou un nouvel accident est identifié, le tableau de gestion de risque étant mis à jour à l'issue des étapes nouvellement effectuées.

10. Système de gestion de risques pour la mise en oeuvre d'un procédé de gestion de risque selon l'une quelconque des revendications 1 à 9, comprenant des moyens de stockage d'informations liés à des risques et accidents susceptibles d'affecter des systèmes de transport et à des états de fonctionnement desdits système de transport, des moyens de calculs de valeurs de l'indicateur représentatif de l'impact desdits risques et accidents en fonction d'un état de fonctionnement donné et de mesures de réduction de la valeur de l'indicateur, des moyens de saisie d'informations par un utilisateur et des moyens d'édition d'un tableau de gestion de risques du système de transport analysé.

11. Système de gestion de risques selon la revendication 10, **caractérisé en ce que** les moyens de stockage et les moyens de calculs sont placés sur un serveur (2) et accessibles à distance au moyen d'une application en ligne.
